# EUROPÄISCHE PATENTSCHRIFT

(11) **EP 0 350 613 B1**
(45) Veröffentlichungstag und Bekanntmachung des Hinweises auf die Patenterteilung: **20.10.1993**
(21) Anmeldenummer: 89110012.5
(22) Anmeldetag: 02.06.1989
(51) Int. Cl.: C08B 30/04, C12S 3/02

(54) **Biotechnisches Verfahren zur Gewinnung von reiner, Protein-freier Stärke aus Erbsen**
Biotechnological method for obtaining pure, protein-free starch from peas
Procédé biotechnologique pour l'obtention d'amidon sans protéine à partir de pois

(30) Priorität: 11.07.1988 DE 3823462
(43) Veröffentlichungstag der Anmeldung: 17.01.1990
(73) Patentinhaber: Dr. Frische GmbH, D-63755 Alzenau (DE)
(72) Erfinder: Frevert, Jürgen, Dr., D-6000 Frankfurt am Main 1 (DE); Frische, Rainer, Dr., D-6000 Frankfurt am Main (DE); Hart, Joanne C., CH-1226 Thonex (CH)
(74) Vertreter: Reichel, Wolfgang, Dipl.-Ing.

(56) Entgegenhaltungen:
- DE-A- 375 702
- DE-A- 2 922 247
- CHEMICAL ABSTRACTS, Band 92, Nr. 26, 30. Juni 1980, Seite 90, Zusammenfassung Nr. 217035z, Columbus, Ohio, US;

## Beschreibung

Die Erfindung betrifft ein biotechnisches verfahren zur Gewinnung von reiner Stärke aus Erbsen, insbesondere aus Erbsen, deren Stärke vorwiegend aus Amylose besteht.

Es ist bekannt, Stärke aus pflanzlichen Rohstoffen, wie Mais, Kartoffeln, Weizen, Reis und Maniok, unter Anwendung der konventionellen mechanischen Methoden zu gewinnen. Hierbei werden aus dem gemahlenen, gesichteten und gesiebten Pflanzengut durch Behandeln mit Wasser die aus dem Zellverband herausgelösten Stärkekügelchen ausgeschwemmt und durch Sedimentation abgetrennt. Dieses Verfahren ist apparativ relativ aufwendig und daher nur bei Anwendung in großem Maßstab wirtschaftlich einzusetzen, zu dem ist es bei Erbsen leider nicht erfolgreich anwendbar, um wirklich reine Stärke zu gewinnen.

Bei der Erbse handelt es sich um eine Pflanze, die leicht zu kultivieren ist, einen hohen Stärkegehalt aufweist und Arten mit Amylose-reicher Stärke umfaßt.

Der technischen Nutzung des Stärkegehaltes der Erbse stand bislang der relativ hohe Gehalt an Proteinen entgegen, die an die Stärke, insbesondere an die Amylose-reiche Stärke, relativ fest komplex gebunden sind. Das konventionelle mechanische Verfahren liefert aber bei Anwendung auf proteinreichem Pflanzengut mit Amylose-reicher Stärke keine reine Stärke.

Auch das in der DE-A-29 22 247 beschriebene Verfahren, bei dem wäßrige Suspensionen von Erbsenmehl oder anderem Gemüsesamenmehl in ein Stärkeprodukt überführt werden, liefert selbst bei wiederholter aufwendiger Nachbehandlung keine wirklich proteinfreie Stärke, obwohl offensichtlich von Leguminosen mit normaler Stärkezusammensetzung ausgegangen wird. Zudem ist zu beachten, daß die Verwendung von Sauren stets zu einer zumindest geringfügigen Spaltung von Stärkemolekülen führt und damit einen Abbau der Stärke bewirkt, der einem späteren Einsatz der Stärke als Stärkewerkstoff entgegensteht.

Ein in der DD-139 361 beschriebenes Verfahren liefert Stärke mit reduziertem Proteingehalt, jedoch ausgehend von bereits gewonnener Getreidestärke. Hierzu wird die B-Stärkefraktion, die zusammen mit der reinen A-Stärkefraktion mittels eines konventionellen mechanischen Verfahren zur Glutenabtrennung aus Weizenmehl gewonnen worden ist und noch nicht lösliches Rest-Gluten enthält, in Form einer Stärkesuspension mit Proteasen behandelt.

Auf diese Weise gelingt es, den Rest-Glutengehalt der nach der Glutenabtrennung anfallenden Stärkesuspension zu verringern.

Die Aufgabe der Erfindung besteht darin, ein Verfahren zu entwickeln, das es ermöglicht, reine Amylose-reiche Stärke aus Erbsen zu gewinnen.

Diese Aufgabe wird durch die kennzeichenden Merkmale des Anspruch 1 gelöst, in dessen Oberbegriff die DD-139 361 gewürdigt ist.

Es wurde gefunden, daß sich das Ziel, die Gewinnung reiner, Protein-freier Amylose-reicher Stärke aus Erbsen mittels eines biotechnischen Verfahrens erreichen läßt, das dadurch gekennzeichnet ist, daß man Erbsen mit einem hohen Stärkegehalt von mehr als 30%, deren Stärke einen Amylosegehalt von bevorzugt mehr als 80% aufweist und die nach dem Homogenisieren lediglich in eine wäßrige Suspension mit einem pH-Wert im Bereich von 3 bis 10 überführt worden sind, im Temperaturbereich von 20 bis 50 °C der Inkubation mit Amylase-freier Protease unterwirft, wobei das Protein hydrolisiert wird und in die wäßrige Phase übergeht, und nach beendeter Inkubation die in fester Form vorliegende Stärke aus der wäßrigen Phase abtrennt.

Als Ausgangsmaterial werden zweckmäßig Erbsen, geschält und vorzugsweise entkeimt, verwendet. Die Erbsen können als Erbspulver oder in verquollener, geschälter und entkeimter Form verwendet werden.

Nach einer zweckmäßigen Ausführungsform der Erfindung werden die vorgequollenen, geschälten und entkeimten Erbsen nach der Homogenisierung im Naßverfahren in eine wäßrige Mischung übergeführt, deren Feststoffgehalt bis zu ca. 30 % (Trockensubstanz) betragen kann. Die so erhaltene Mischung wird bei Raumtemperatur mit einer oder mehreren Amylase-freien wasserlöslichen Proteasen versetzt, die Pflanzenprotein hydrolysieren und die im Temperaturbereich von 20 bis 50°C stabil sind. Derartige Proteasen sind im Handel erhältlich.

Von den Amylase-freien Proteasen wird denjenigen der Vorzug gegeben, die die Pflanzenproteine - unabhängig von ihrem Aufbau - in wasserlösliche Proteinbausteine zu spalten vermögen und die im Temperaturbereich um 50 °C aktiv sind, ohne zu schnell zu denaturieren. Dieses Ziel kann mit einer relativ unspezifischen Protease oder mit einer Kombination von mehreren Proteasen verschiedener Hydrolyseeigenschaften erreicht werden.

Die Menge, in der die Proteasen der zu inkubierenden Lösung zugesetzt werden, ist nicht kritisch; sie beträgt weniger als 1 % bezogen auf das Gesamtvolumen der Mischung.

Der pH-Wert der wässrigen Lösung, die der Inkubation unterworfen werden soll, sowie die Inkubationstemperatur hängen von der verwendeten Amylase-freien Protease oder Proteasenmischung ab. Der pH-Wert liegt im Bereich von 3 bis 10, die Inkubationstemperatur im Bereich von 20 bis etwa 50 °C, und die Inkubationsdauer beträgt etwa 12 Stunden.

Die Inkubation ist beendet, wenn das Protein hydrolisiert und in die wässrige Phase gegangen ist und die freigesetzten Stärkekörner sedimentieren.

Nach Beendigung der Inkubation wird die in fester Form vorliegende Stärke von der Flüssigkeit in an sich bekannter Weise, z.B. durch Filtrieren, Zentrifugieren, Dekantieren etc., abgetrennt, mehrfach mit Wasser gewaschen und getrocknet.

Auf diese Weise ist es möglich, eine reine, praktisch vollständig von Proteinen und anderen Fremdstoffen befreite Stärke als Stärkekörner mit einem Amylosegehalt von mehr als 80 % zu gewinnen.

Die gemäß Erfindung erhaltene reine und Protein-freie Stärke mit hohem Amylosegehalt kann als Grundstoff z.B. zur Herstellung von leicht abbaubaren und umweltfreundlichen Polymeren verwendet werden. Sie eignet sich auch zur Herstellung von Cyolodextrinen.

Die nach der Abtrennung der Stärke erhaltene wässrige Lösung, die das Proteinhydrolysat enthält, kann zur Herstellung von Futtermitteln für die Landwirtschaft oder von Nährmedien für die Biotechnik, z.B. für die Antibiotikaproduktion, verwendet werden.
Die mit der biotechnischen Stärkegewinnung der Erfindung verbundenen Vorteile bestehen außerdem darin, daß das neue Verfahren keinen großen apparativen Aufwand erfordert und sich infolgedessen nicht nur in großtechnischem Maßstab, sondern auch in kleinem Maßstab wirtschaftlich durchführen läßt, und daß es praktisch keine unverwertbaren und umweltbelastenden Abfallprodukte liefert.

Das Verfahren der Erfindung soll durch das folgende Beispiel näher erläutert werden. Eine Beschränkung ist hieraus nicht herzuleiten.

### Beispiel:

30 g halbierte, geschälte und getrocknete Erbsen (Stärkegehalt von ca. 30 %, Amylosegehalt der Stärke mehr als 80 %) wurden mit 60 ml 0,1-molarem Tris/HCL, pH8, versetzt und 4 Stunden bei Raumtemperatur quellen gelassen. Danach homogenisierte man die so erhaltene Mischung mit einem Ultra-Turrax, fügte 0,6 ml Alkalase (eine im Handel erhältliche Proteaselösung der Firma Novo, Dänemark) zu und führte die In kubation bei 50^{o}C unter leichtem Schütteln 16 Stunden durch. Anschließend gab man 0,6 ml frische Alkalase zu und setzte die Inkubation unter den gleichen Bedingungen weitere 16 Stunden fort. Danach zentrifugierte man die erhaltene Mischung bei 1000 Upm 20 Minuten, trennte den aus Amylose-reicher Stärke bestehenden Niederschlag von der Protein und Enzym enthaltenden wässrigen Lösung ab, wusch den Niederschlag mehrere Male mit Wasser und einmal mit Äthanol und trocknete ihn.

Die Analyse ergab, daß der erhaltene körnige Niederschlag aus reiner, Protein-freier Stärke mit einem Amylosegehalt von mehr als 80 % bestand.

Die nach Abtrennung der Stärke erhaltene wässrige Lösung kann nach Entfernung des Wassers der weiteren Verwendung zur Herstellung von Futtermitteln für die Landwirtschaft, von Nährmedien für Mikroorganismen etc. zugeführt werden.

## Patentansprüche

1. Biotechnisches Verfahren zur Gewinnung von reiner, Protein-freier Stärke unter Anwendung einer Inkubation mit Amylase-freier Protease im Temperaturbereich von 20 bis 50 °C,
dadurch gekennzeichnet,
daß man als Ausgangsmaterial Erbsen mit einem Stärkegehalt von mehr als 30%, deren Stärke einen Amylosegehalt von mehr als 80% aufweist, verwendet und die Erbsen, die nach dem Homogenisieren in eine wäßrige Suspension mit einem pH-Wert im Bereich von 3 bis 10 überführt worden sind, der Inkubation mit Amylase-freier Protease unterwirft, wobei das Protein hydrolisiert wird und in die wäßrige Phase übergeht, und daß man nach beendeter Inkubation die in fester Form vorliegende Stärke von der wäßrigen Phase abtrennt.

2. Verfahren nach Anspruch 1,
dadurch gekennzeichnet,
daß man als Amylase-freie Protease eine oder mehrere wasserlösliche Proteasen verwendet, die Pflanzenproteine hydrolisieren und damit Stärkekörner freisetzen.

## Claims

1. Biotechnical method of producing pure, protein-free starch, making use of an incubation with amylase-free protease in the temperature range of 20 to 50° C,
**characterized in**
that peas with a starch content of more than 30%, the starch of which having an amylose content of more than 80 percent, are used as starting material, and that the peas having been transferred into an aqueous suspension with a pH-value in the range of 3 to 10 after homogenization, are subjected to said incubation with amylase-free protease, whereby the protein is hydrolized and converted into the aqueous phase, and that the starch, that is available in solid form after the completed incubation, is separated from the aqueous phase.

2. Method according to claim 1,
**characterized in**
that one or several water-solube proteases are used as the amylase-free protease, said proteases hydrolizing the plant proteins and thus separating the starch granules.

## Revendications

1. Procédé biotechnologique pour l'obtention d'amidon pur, sans protéine, par application d'une incubation avec une protéase exempte d'amylase dans la gamme de températures de 20 à 50°C, caractérisé en ce que, comme matière de départ, on utilise des pois qui présentent une teneur en amidon supérieure à 30 % et dont l'amidon présente une teneur en amylose supérieure à 80 % et en ce qu'on soumet les pois, qui, après une homogénéisation, ont été transformés en une suspension aqueuse ayant une valeur de pH de l'ordre de 3 à 10, à l'incubation avec une protéase exempte d'amylase, la protéine étant hydrolysée et passant dans la phase aqueuse, et en ce que, après l'achèvement de l'incubation, on isole de la phase aqueuse l'amidon qui se présente sous forme solide.

2. Procédé suivant la revendication 1, caractérisé en ce que, comme protéase exempte d'amylase, on utilise une ou plusieurs protéases solubles dans l'eau qui hydrolysent des protéines végétales et ainsi libèrent des grains d'amidon.
